# EUROPEAN PATENT SPECIFICATION

(11) **EP 1 621 902 B1**
(45) Date of publication and mention of the grant of the patent: **03.02.2016**
(21) Application number: 04726802.4
(22) Date of filing: 09.04.2004
(51) Int. Cl.: G02B 1/04, G01N 21/35

(54) **TERA-HERTZ WAVE TRANSMITTING OPTICAL COMPONENT, TERA-HERTZ WAVE OPTICAL SYSTEM, TERA-HERTZ BAND WAVE PROCESSING DEVICE AND METHOD**
TERAHERTZWELLEN DURCHLASSENDE OPTISCHE KOMPONENTE, OPTISCHES TERAHERTZWELLENSYSTEM, TERAHERTZBAND-WELLENVERARBEITUNGSEINRICHTUNG UND VERFAHREN
COMPOSANT OPTIQUE EMETTEUR D'ONDE TERAHERTZ, SYSTEME OPTIQUE A ONDE TERAHERTZ, DISPOSITIF ET PROCEDE DE TRAITEMENT D'ONDES DE LA GAMME TERAHERTZ

(30) Priority: 11.04.2003 JP 2003107885
(43) Date of publication of application: 01.02.2006
(73) Proprietor: RIKEN, Wako-shi, Saitama 351-0198 (JP); Pax Co., Ltd., Sendai-shi, Miyagi 989-3204 (JP)
(72) Inventor: MINAMIDE, Hiroaki RIKEN Photodynamics Research Ctr, Sendai-shi, Miyagi 9800845 (JP); ITO, Hiromasa, RIKEN Photodynamics Research Center, Sendai-shi, Miyagi 9800845 (JP); KUDO, Akihito, PAX CO., LTD., Sendai-shi, Miyagi 9893204 (JP)
(74) Representative: Dr. Weitzel & Partner
(86) International application number: PCT/JP2004/005137
(87) International publication number: WO 2004/092788

(56) References cited:
- EP-A- 1 505 382
- WO-A-03/050179
- JP-A- 9 026 501
- JP-A- 2000 321 134
- JP-A- 2002 072 269
- JP-A- 2002 303 574
- US-B1- 6 214 951

## Description

### Technical Field

The present invention relates to an optical component for terahertz wave, a terahertz wave optical system, a terahertz band wave processing apparatus and method and, for example, relates to an optical component for terahertz wave, a terahertz band wave processing apparatus and method capable of making easier use of terahertz light more effectively.

### Background Art

(Patent Reference 1)
   JP-A-2002-303574
(Patent Reference 2)
   JP-A-2002-246664
(Patent Reference 3)
   JP-A-2002-223017

Conventionally, terahertz band electromagnetic waves are invisible light in a normal state. Such terahertz band light is electromagnetic waves present in a zone of wavelengths of 3 mm to 30 µm and frequencies of 100 GHz to 10 THz, and is used in inspection, measurement, imaging of a substance and various other fields.

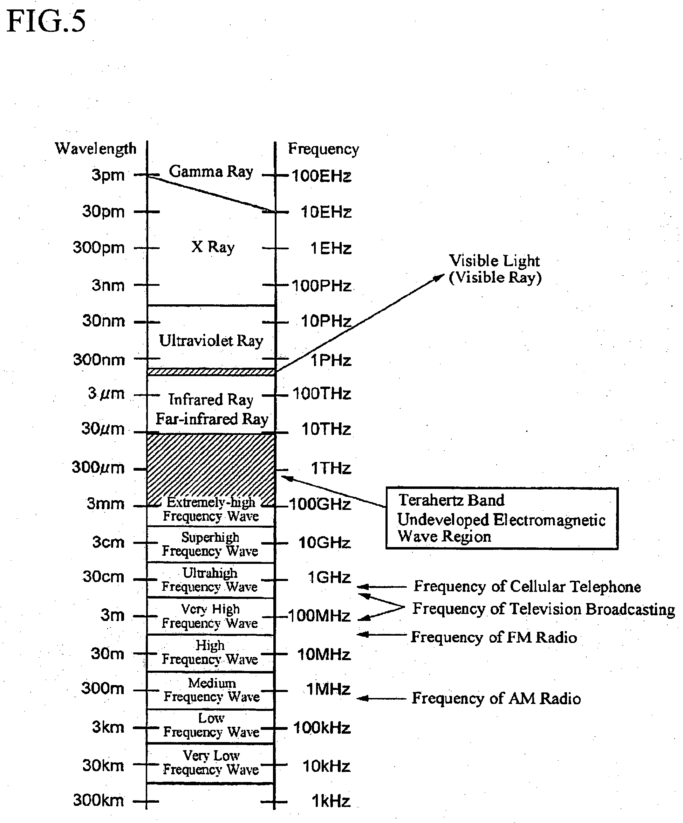

As described above, the terahertz light cannot be seen directly by human eyes. Fig. 5 shows a frequency distribution of wavelengths ranging from a very low frequency wave (VLF) to a gamma ray. In this frequency band, it is apparent that visible light (visible ray) is wavelength light of a very narrow frequency band in the range of an infrared ray to an ultraviolet ray.

It is apparent from Fig. 5 that terahertz electromagnetic waves are invisible rays, and are present in a wavelength region in the range of an extremely-high frequency wave (EHF) to a far-infrared ray. In the terahertz electromagnetic waves, commercialization has proceeded particularly in recent years and the emergence of a simple observation tool capable of observing and adjusting the optical axis of terahertz light has been desired. The following arts have been proposed as the observation tool based on these desires.

An exemplary reference is JP 2002-072269 A, referring to a terahertz wave generating device. Furthermore, JP 2000-321134 A D7 discloses a terahertz spectrophotometer.

In Patent Reference 1, alignment of a terahertz optical system is adjusted while a terahertz light source of a dipole antenna etc. is replaced with a pinhole etc. and visible light or near-infrared light (in many cases, pump light itself) is passed through the pinhole and a situation of its transmitted light is observed. That is, the adjustment is made by considering that an optical path of the transmitted light of the pinhole is the same as an optical path of the terahertz light.

Incidentally, in the case of visible light, its radiation position etc. can be observed directly with the naked eye. In the case of near-infrared light etc., observation can be made easily by using a simple and easy observation tool such as a card type infrared sensor (for example, "SIRC-(1)" (trade name) commercially available from Sigma Koki Co., Ltd.) in which material for emitting visible light in response to the near-infrared light is applied to a sheet member.

The art of Patent Reference 2 is a single-crystal inherent Josephson junction terahertz detector capable of surely joining a terahertz signal system to an inherent Josephson junction position. In the single-crystal inherent Josephson junction terahertz detector, its configuration comprises a substrate, a Josephson junction device inherent in a perfect superconducting single crystal (Bi₂Sr₂Cu₂O₈) manufactured in a two-sided processing process mounted on this substrate, and an antenna integrated into this Josephson junction device.

A terahertz photodetector comprising a terahertz optical element, a radiation part for radiating a predetermined place of said terahertz optical element with femtosecond pulsed light from the side opposite to a substrate, and a current detection part for detecting a current passing between two conductive films is disclosed in Patent Reference 3.

The terahertz optical element comprises a substrate, a photoconductive film formed on a plane of this substrate, and two conductive films mutually separated and formed on the photoconductive film. Portions of the conductive films are mutually arranged at a predetermined spacing d in a direction along the plane of the substrate. The substrate is formed so as to perform lens action on terahertz light which is emitted from the substrate to the side opposite to the photoconductive film or enters the substrate from the side opposite to the photoconductive film.

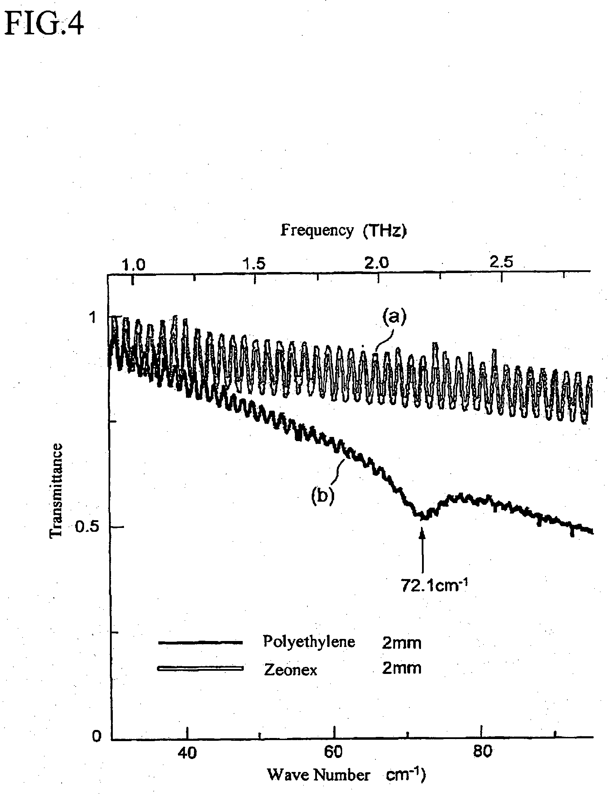

However, electromagnetic waves of a terahertz band have a high attenuation rate as compared with rays of a visible light region. The present characteristics are also apparent from Fig. 4. In Fig. 4, a graph (b) shows characteristics of attenuation rates to wavelengths (THz) in the case of transmitting electromagnetic waves of the terahertz band to conventional polyethylene with a plate thickness of 2 mm. It is apparent from the present graph (b) that transmission characteristics decrease suddenly as a frequency becomes high. Also, the terahertz band is invisible light and has a problem that handling of the invisible light is difficult as compared with visible light.

JP 2002-303574 A discloses a terahertz optical device, using visible light as probe light. However no measure is described how to deal with differences in the attenuation characteristic of visible light and terahertz waves.

Also, in the conventional arts disclosed, it is very difficult to accurately replace the terahertz light source in the same position as that of the pinhole in Patent Reference 1. As a result of this, by only replacing the pinhole with the terahertz light source after alignment of the terahertz optical system is adjusted with reference to the transmitted light of the pinhole, its alignment cannot be adjusted accurately.

As a result of that, in the conventional adjustment method for adjusting alignment of the present terahertz optical system, the alignment of the terahertz optical system is actually readjusted and optimized so that intensity increases while measuring the intensity of a detection signal of terahertz light after being replaced with a light source of the pinhole.

In work of this optimization, repeats of trial and error in which the alignment of the terahertz optical system is gradually changed with the help of the intensity of the detection signal of the terahertz light are indispensable. Therefore, in the present conventional adjustment method, the repeats of trial and error described above are required in order to accurately perform the alignment of the terahertz optical system. As a result of this, a problem of taking vast amounts of time and effort is involved.

In the art of Patent Reference 2, it is necessary to use superconducting material and the art has problems that cost is high and also production is difficult.

The art of Patent Reference 3 has a problem that its production is complicated.

Also, generally in recognition of terahertz waves, a bolometer using liquid helium is known. However, this art has a problem of requiring a large-scale measurement system.

An object of the present invention is to provide a low-cost and easy-to-produce optical component for terahertz wave, a terahertz band wave processing apparatus and method.

### Disclosure of the Invention

The present invention refers to an optical component for terahertz wave transmission comprising cycloolefin.

The present invention refers to an optical component, which is any of a lens, a prism, a beam supplier, a beam splitter, a fiber, a waveguide, a mirror, a polarizer and a window.

A terahertz optical system of the present invention is characterized by having a terahertz wave generation source, and an optical component comprising cycloolefin arranged on the optical axis of terahertz waves generated from said terahertz generation source.

A terahertz band wave processing apparatus of the present invention is configured to have a terahertz wave generator for generating predetermined terahertz waves, a terahertz wave detector for detecting the terahertz waves, a first light transmission regulator for defining a light transmission path between the terahertz wave generator and the terahertz wave detector and regulating the optical axis, a light semi-transmissive plate for transmitting terahertz waves on the optical axis between the first light transmission regulator and the terahertz wave detector and reflecting light incident at a predetermined incident angle, and a second light transmission regulator set on the optical axis between the light semi-transmissive plate and the terahertz wave detector, and is characterized in that predetermined visible light enters the light semi-transmissive plate as pilot light and is reflected by said light semi-transmissive plate and the optical axis of said reflected visible light is superimposed on the optical axis of the terahertz waves and the optical axis of said terahertz waves can be visually recognized in a simulated manner by the visible light.

Also, preferably, the above terahertz wave detector is an Si bolometer, and the apparatus further has at least one pilot light guide mirror for use as optical axis adjustment of the pilot light entering the light semi-transmissive plate, and a visible light laser is used as the pilot light, and an aperture is applied to the light transmission regulator and a cycloolefin plate is applied to the light semi-transmissive plate, respectively.

The invention apparatus allows to conduct a terahertz band wave processing method with a detector position adjustment step of adjusting a direction and a position of a detector for detecting predetermined terahertz waves to a traveling direction of said terahertz waves, an aperture setting step of setting at least one aperture in a position in which a measured value of the detector does not decrease, and a pilot optical axis adjustment step of passing predetermined pilot light through the aperture using a pilot light guide mirror and coaxially superimposing the optical axis of said pilot light on the optical axis of the terahertz waves, and wherein visible light is used as pilot light and the optical axis of said visible light is superimposed on the optical axis of the terahertz waves and the optical axis of said terahertz waves can be visually recognized in a simulated manner by the visible light.

Action of the present invention will be described below along with knowledge obtained in the case of implementing the present invention.

Whereas cycloolefin was conventionally used as material of an optical system component, e.g. by US-B1 6214951 and JP-A-9026501, the present inventors found that said component had good transmission characteristics with respect to terahertz waves as a result of more specifically examining characteristics of the optical component made of cycloolefin.

In addition, they found that said component also had good transmission characteristics with respect to visible light. Further, they found that a difference between visible light and terahertz light in a refractive index was 0.01 or less. As a result of that, since the difference in the refractive index is very small though wavelengths of both the visible light and terahertz light are very separate, the lights are collected in the same place even in the case of passing through an optical component such as a lens, so that the visible light can be used as pilot light. After all, for example, when the optical axis of terahertz waves is always matched with the optical axis of the visible light, the optical axis of the terahertz waves can be known by seeing the visible light.

The present invention is means for increasing the uses by finding new characteristics of the optical component made of cycloolefin as described above.

The present invention uses, high polymeric substances as cycloolefin. A polymer (cycloolefin polymer) or a copolymer (cycloolefin copolymer) is preferably used. The cycloolefin polymer is available as a trade name of ZEONEX (registered trademark), and the cycloolefin copolymer is available as a trade name of APEL (manufactured by Mitsui Chemicals, Inc.).

### Brief Description of the Drawings

Fig. 1 shows a first processing procedure example to which an embodiment of an optical component for terahertz wave, a terahertz band wave processing apparatus of the present invention is applied.
Fig. 2 is a system diagram showing a configuration example of a terahertz band wave processing apparatus to which a step 2 is applied.
Fig. 3 is a system diagram showing a configuration example of a terahertz band wave processing apparatus to which a step 3 is applied.
Fig. 4 is a graph showing a characteristic example of light transmittance in comparison between a cycloolefin polymer and polyethylene.
Fig. 5 shows a frequency distribution of wavelengths ranging from a very low frequency wave (VLF) to a gamma ray.
Fig. 6 is a graph showing light transmittance in the case of a cycloolefin copolymer.

### (Description of Reference Numerals and Signs)

- 1, 2, 3: Aperture
- 4: Cycloolefin Plate
- 5: Si Bolometer (Detector)
- 10: Terahertz Wave Generator
- 11: Terahertz Wave
- 12: Pilot Light
- 21, 22: Pilot Light Guide Mirror

### Best Mode for Carrying Out the Invention

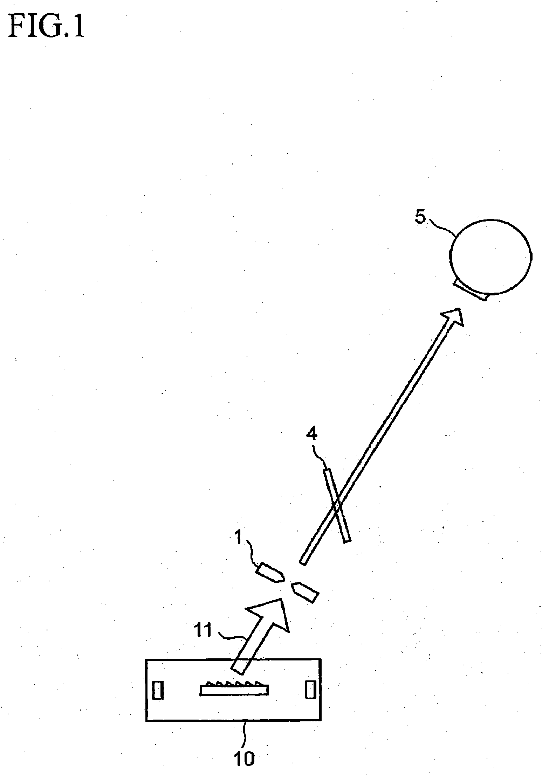

Next, an embodiment of an optical component for terahertz wave, a terahertz band wave processing apparatus according to the present invention will be described in detail with reference to the accompanying drawings. Referring to Figs. 1 to 4, one embodiment of an optical component for terahertz wave, a terahertz band wave processing apparatus of the present invention is shown.

Figs. 1 to 3 show a processing procedure example of coaxially superimposing a pilot beam (visible light) on terahertz waves. A processing procedure of the embodiment is constructed based on the corresponding processing of a step 1 to a step 3 shown in Fig. 1 to Fig. 3. The present alignment procedure example is shown below.

### (Step 1)

Fig. 1 is a system diagram showing a configuration example of an optical component for terahertz wave, a terahertz band wave processing apparatus and method to which a step 1 is applied. In the present Fig. 1, the optical component for terahertz wave, the terahertz band wave processing apparatus to which the step 1 is applied are configured to have a terahertz wave generator 10 of a parametric oscillator type, an aperture 1, a cycloolefin plate 4, and an Si bolometer (detector) 5. Terahertz waves 11 are outputted from the terahertz wave generator 10. The transmission optical axis of the aperture 1 is set at the optical axis of the terahertz waves 11 outputted. The cycloolefin plate 4 is set in the front and back of the plate in a state of transmitting the terahertz waves 11. Further, a direction and a position of the Si bolometer 5 are adjusted to a direction perpendicular to the optical axis of the terahertz waves.

### (Step 2)

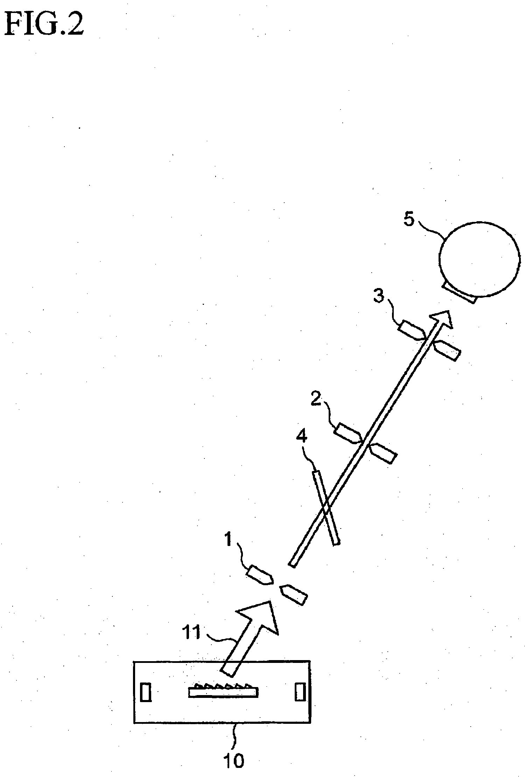

Fig. 2 is a diagram showing a second processing procedure example of coaxially superimposing a pilot beam (visible light) 12 on terahertz waves, and is a system diagram showing a configuration example of an optical component for terahertz wave, a terahertz band wave processing apparatus to which a step 2 is applied. In the present Fig. 2, an aperture 2 and an aperture 3 are further added in addition to the optical component for terahertz wave, the terahertz band wave processing apparatus and method to which the step 1 shown in Fig. 1 is applied. In the present step 2, the aperture 2 and the aperture 3 are newly added and set between a cycloolefin plate 4 and an Si bolometer 5. In this addition and setting, the aperture 2 and the aperture 3 are set in a position in which a detection measured value of a terahertz wave signal of the Si bolometer 5 does not decrease. The present setting requires that the optical axes of transmission holes of the aperture 2 and the aperture 3 added should be matched with the optical axis of terahertz waves 11.

### (Step 3)

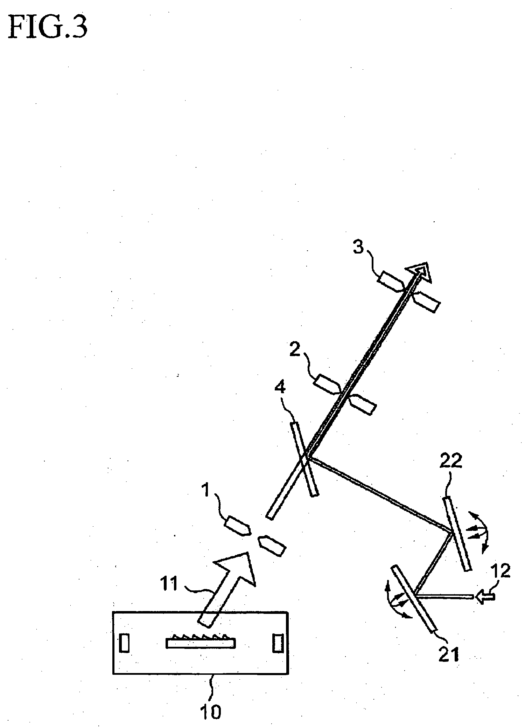

Fig. 3 shows a third processing procedure example, and is a system diagram showing a configuration example of an optical component for terahertz wave, a terahertz band wave processing apparatus to which a step 3 is applied. In the present Fig. 3, a pilot light guide mirror 21 and a pilot light guide mirror 22 are further added and set in addition to the optical component for terahertz wave, the terahertz band wave processing apparatus to which the step 2 shown in Fig. 2 is applied. In the present step 3, after the addition processing of these pilot light guide mirror 21 and pilot light guide mirror 22, for example, pilot light 12 of a visible light laser is superimposed on terahertz waves 11.

The pilot light guide mirror 21 and the pilot light guide mirror 22 are added, and the pilot light 12 of the visible light laser is coaxially superimposed on the terahertz waves 11 by setting angle adjustment of the pilot light guide mirror 21 and the.pilot light guide mirror 22. In the present processing, a setting position, a setting angle, etc. of the pilot light guide mirror 21 and the pilot light guide mirror 22 are adjusted so that the optical axis of the pilot light 12 is superimposed on the axis of the terahertz waves 11 to a cycloolefin plate 4. By this position setting and angle adjustment, the optical axis of the pilot light 12 is superimposed on the optical axis of the terahertz waves 11.

The optical axis of the pilot light 12 can also be adjusted while making a check by a look because of visible light besides while checking an output signal of an Si bolometer 5. By the present adjustment, the optical axis of the pilot light 12 and the optical axis of the terahertz light 11 can be set at the same axis. The optical axis of the terahertz light after coaxially superimposing the pilot light 12 on the terahertz light 11 becomes a visible state in a simulated and artificial manner.

In the embodiment of the optical component for terahertz wave, the terahertz band wave processing apparatus of the above configuration, it is necessary to further increase reflection characteristics with respect to the pilot light 12 and further decrease attenuation characteristics with respect to the terahertz light 11 as the cycloolefin plate 4. A concrete example of this cycloolefin plate 4 includes high-function resin (trade name; ZEONEX, Nippon Zeon Co., Ltd.). Fig. 4 shows a characteristic example of light transmittance in comparison between polyethylene and this trade name; ZEONEX (ZEONEX).

In Fig. 4, the axis of abscissa is a frequency [THz/terahertz] and the axis of ordinate is transmittance [Transmittance]. In two graphs in Fig. 4, the upper (a) is a characteristic graph of ZEONEX and the lower (b) is a characteristic graph of polyethylene, respectively. It is apparent from the present Fig. 4 that ZEONEX has better transmission characteristics. Incidentally, test specimens of the same thickness are used in both the measurement.

In application as the cycloolefin plate 4 of high-function resin, it is determined that use can be made in AR coat (anti-reflection coat) material for terahertz wave. Reflection can be reduced by forming thicknesses according to wavelengths on various optics optical planes for terahertz. Various application examples of the high-function resin are listed below.

### (Various lens materials for terahertz wave)

Lenses with the same forms as those of various lenses used in optics, for example, plano-convex, double-convex, concave, rod or cylindrical can be produced. And, the function as the cycloolefin plate 4 can be performed simultaneously with respect to visible light and terahertz waves.

### (Materials for various prisms for terahertz)

Lenses with the same forms as those of various lenses used in optics, for example, 45°, right angle, roof or dove can be produced. And, the function as the cycloolefin plate 4 can be performed simultaneously with respect to visible light and terahertz waves.

### (Application to beam splitter, beam supplier for terahertz wave)

A beam supplier or a beam splitter for splitting one terahertz wave into a surface reflected wave and a transmitted wave can be produced by being processed into plate shape. And, the function as the cycloolefin plate 4 can be performed simultaneously with respect to visible light and terahertz waves.

### (Fiber material for terahertz wave)

Terahertz waves having a disadvantage in propagating through the air can be handled easily by being formed into fiber. And, the function as the cycloolefin plate 4 can be performed simultaneously with respect to visible light and terahertz waves.

### (Waveguide material for terahertz wave)

Terahertz waves having a disadvantage in propagating through the air can be propagated with high efficiency by being formed into waveguide shape. And, the function as the cycloolefin plate 4 can be performed simultaneously with respect to visible light and terahertz waves.

### (Use in experiment for terahertz wave)

By using high transmission characteristics of terahertz waves, use in experiment in spectroscopy etc. can be made by being processed into a prepared slide (plate shape) or a sample (column shape) case, etc. and putting or inserting a specimen. And, the function as the cycloolefin plate 4 can be performed simultaneously with respect to visible light and terahertz waves.

Incidentally, the embodiment described above is one example of preferred embodiments of the present invention. However, the present invention is not limited to this embodiment and various modifications can be made within the scope of protection defined by the accompanying set of claims.

Configuration examples of diversification and effect examples associated with the diversification are listed below.

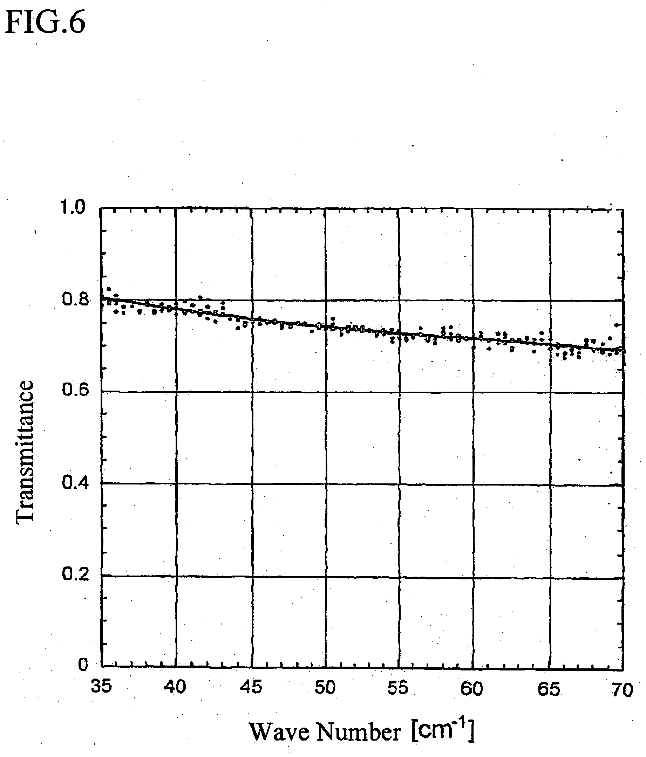

Fig. 6 shows a result of carrying out a transmission test on terahertz waves using a trade name of APEL manufactured by Mitsui Chemicals, Inc. as cycloolefin. Incidentally, said test was carried out at an incident angle of 0° using a lens with a thickness of 3.5 mm. Also in the present example, good transmittance was obtained.

Incidentally, a thickness of an optical component in the present invention is not particularly limited. Also, an incident angle of terahertz waves is not particularly limited and is useful in the wide range.

### Industrial Applicability

As is evident from the above description, a terahertz band wave processing apparatus of the present invention is configured to generate predetermined terahertz waves and dispose an optics optical plane constructed of high-function resin in the front of a traveling direction of this generated terahertz waves. By the present configuration, the apparatus with excellent transmission characteristics of terahertz band waves can be configured.

## Claims

1. A terahertz wave optical system **characterized by** having a terahertz wave generation source, and an optical component comprising a polymer of cycloolefin arranged on the optical axis of terahertz waves generated from said terahertz generation source, wherein the frequency of the terahertz waves is 100 GHz to 10 THz.

2. A terahertz wave optical system as claimed in claim 1, **characterized by** being constructed so that a visible light source is disposed and visible light from said visible light source is superimposed on the optical axis of the terahertz waves.

3. A terahertz wave optical system as claimed in claim 2, **characterized in that** the terahertz wave optical system further comprises:
a terahertz wave detector for detecting the terahertz waves;
a first light transmission regulator for defining a light transmission path between the terahertz wave generation source and the terahertz wave detector and for regulating the optical axis,
a light semi-transmissive plate for transmitting terahertz waves on the optical axis between the first light transmission regulator and the terahertz wave detector and reflecting light incident at a predetermined incident angle, wherein a cycloolefin plate is applied to the light semi-transmissive plate, and
a second light transmission regulator set on the optical axis between the light semi-transmissive plate and the terahertz wave detector, **characterized in that**
predetermined visible light enters the light semi-transmissive plate as pilot light and is reflected by said light semi-transmissive plate and the optical axis of said reflected visible light is superimposed on the optical axis of the terahertz waves and the optical axis of said terahertz waves can be visually recognized in a simulated manner by the visible light.

4. A terahertz wave optical system as claimed in claim 3, **characterized in that** the terahertz wave detector is an Si bolometer.

5. A terahertz wave optical system as claimed in claim 3 or 4, **characterized by** further having at least one pilot light guide mirror for use as optical axis adjustment of the pilot light entering the light semi-transmissive plate.

6. A terahertz wave processing apparatus as claimed in any of claims 3 to 5, **characterized in that** a visible light laser is used as the pilot light.

## Patentansprüche

1. Optisches Terahertzwellensystem, **dadurch gekennzeichnet, dass** es eine Terahertzwellenerzeugungsquelle und eine optische Komponente umfasst, die ein Cycloolefin-Polymer umfasst, das auf der optischen Achse der Terahertzwellen angeordnet ist, die durch die Terahertzerzeugungsquelle erzeugt werden, wobei die Frequenz der Terahertzwellen 100 GHz bis 10 THz beträgt.

2. Optisches Terahertzwellensystem nach Anspruch 1, **dadurch gekennzeichnet, dass** es derart aufgebaut ist, dass eine Quelle für sichtbares Licht vorgesehen ist und das sichtbare Licht aus der Quelle für sichtbares Licht über die optische Achse der Terahertzwellen gelagert wird.

3. Optisches Terahertzwellensystem nach Anspruch 2, **dadurch gekennzeichnet, dass** das optische Terahertzwellensystem ferner Folgendes umfasst:
einen Terahertzwellendetektor, um die Terahertzwellen zu erkennen;
einen ersten Lichtübertragungsregler, um eine Lichtübertragungsstrecke zwischen der Terahertzwellenerzeugungsquelle und dem Terahertzwellendetektor zu definieren und um die optische Achse einzustellen;
eine halb lichtdurchlässige Platte, um Terahertzwellen auf der optischen Achse zwischen dem ersten Lichtübertragungsregler und dem Terahertzwellendetektor zu übertragen und um das Licht zu reflektieren, das mit einem vorbestimmten Einfallswinkel einfällt, wobei eine Cycloolefin-Platte an der halb lichtdurchlässigen Platte angeordnet ist; und
einen zweiten Lichtübertragungsregler, der auf der optischen Achse zwischen der halb lichtdurchlässigen Platte und dem Terahertzwellendetektor angeordnet ist, **dadurch gekennzeichnet, dass** vorbestimmtes sichtbares Licht als Pilotlicht in die halb lichtdurchlässige Platte eintritt und von der halb lichtdurchlässigen Platte reflektiert wird,
dass die optische Achse des reflektierten sichtbaren Lichts über die optische Achse der Terahertzwellen gelagert wird und dass die optische Achse der Terahertzwellen auf simulierte Weise durch das sichtbare Licht visuell erkannt werden kann.

4. Optisches Terahertzwellensystem nach Anspruch 3, **dadurch gekennzeichnet, dass** der Terahertzwellendetektor ein Si-Bolometer ist.

5. Optisches Terahertzwellensystem nach Anspruch 3 oder 4, **dadurch gekennzeichnet, dass** es ferner wenigstens einen Pilotlicht-Leitspiegel umfasst, der zur Einstellung der optischen Achse des Pilotlichts verwendet wird, das in die halb lichtdurchlässige Platte eintritt.

6. Vorrichtung zur Verarbeitung von Terahertzwellen nach einem der Ansprüche 3 bis 5, **dadurch gekennzeichnet, dass** ein Laser mit sichtbarem Licht als Pilotlicht verwendet wird.

## Revendications

1. Un système optique à rayonnement térahertz **caractérisé par** le fait d'avoir une source de génération de rayonnement térahertz, et un composant optique comprenant un polymère de cyclo-oléfine disposé sur l'axe optique à rayonnement térahertz généré à partir de ladite source de génération térahertz, où la fréquence du rayonnement térahertz est de 100 GHz à 10 THz.

2. Un système optique à rayonnement térahertz tel que revendiqué dans la revendication 1, **caractérisé par** le fait d'être construit pour qu'une source de lumière visible existe et qu'une lumière visible de ladite source de lumière visible soit superposée sur l'axe optique du rayonnement térahertz.

3. Un système optique à rayonnement térahertz tel que revendiqué dans la revendication 2, **caractérisé en ce que** le système optique à rayonnement térahertz comprend de plus :
Un détecteur de rayonnement térahertz pour détecter le rayonnement térahertz ;
Un premier régulateur de transmission de lumière pour définir un chemin de transmission de lumière entre la source de génération de rayonnement térahertz et le détecteur de rayonnement térahertz, et pour le réglage de l'axe optique.
Une plaque semi-transmissive de lumière pour transmettre le rayonnement térahertz sur l'axe optique entre le premier régulateur de transmission de lumière et le détecteur de rayonnement térahertz et pour réfléchir l'incident lumineux à un angle d'incidence prédéterminé, où une plaque cyclo-oléfine est appliquée à la plaque semi-transmissive de lumière, et
Un deuxième régulateur de transmission de lumière fixé sur l'axe optique entre la plaque semi-transmissive de lumière et le détecteur de rayonnement térahertz, **caractérisé en ce que**
Une lumière visible prédéterminée entre sur la plaque semi-transmissive de lumière en tant que lumière pilote et elle est réfléchie par ladite plaque semi-transmissive de lumière et l'axe optique de ladite lumière visible réfléchie est superposé sur l'axe optique du rayonnement térahertz et l'axe optique dudit rayonnement térahertz peut être visuellement reconnu de façon simulée par la lumière visible.

4. Un système optique à rayonnement térahertz tel que revendiqué dans la revendication 3, **caractérisé en ce que** le détecteur de rayonnement térahertz est un bolomètre Si.

5. Un système optique à rayonnement térahertz tel que revendiqué dans les revendications 3 ou 4, **caractérisé par** le fait d'avoir de plus, au moins un miroir guide de lumière pilote à utiliser comme réglage de l'axe optique de la lumière pilote pénétrant sur la plaque semi-transmissive de lumière.

6. Un appareil de traitement du rayonnement térahertz tel que revendiqué dans l'une des revendications 3 à 5, **caractérisé en ce qu'**un laser de lumière visible est utilisé comme lumière pilote.
